# EUROPEAN PATENT APPLICATION

(11) **EP 2 276 267 A2**
(43) Date of publication of application: **19.01.2011**
(21) Application number: 10168248.2
(22) Date of filing: 02.07.2010
(51) Int. Cl.: H04N 13/00

(54) **Image signal processing apparatus and image display**

(30) Priority: 10.07.2009 JP 2009164202
(71) Applicant: Sony Corporation, Minato-ku Tokyo 108-0075 (JP)
(72) Inventor: Miura, Kenji, Minato-Ku, Tokyo (JP); Makimoto, Kenta, Minato-Ku, Tokyo (JP); Kawahara, Yudai, Minato-Ku, Tokyo (JP)
(74) Representative: Robinson, Nigel Alexander Julian

(57) **Abstract**

An image signal processing apparatus and an image display which are hallowed to achieve stereoscopic image display with a more natural sense of depth are provided. The image signal processing apparatus includes: a first motion vector detection section and an information obtaining section. The first motion vector detection section detects one or more two-dimensional motion vectors as motion vectors along an X-Y plane of an image, from an image-for-left-eye and an image-for-right-eye which have a parallax therebetween. The information obtaining section obtains, based on the detected two-dimensional motion vectors, information pertaining to a Z-axis direction. The Z-axis direction is a depth direction in a stereoscopic image formed with the image-for-left-eye and the image-for-right-eye.

## Description

The present invention relates to an image signal processing apparatus performing a process using an image signal for displaying a stereoscopic image, and an image display including such an image signal processing apparatus.

In recent years, as displays for flat-screen televisions and portable terminals, active matrix liquid crystal displays (LCDs) in which TFTs (Thin Film Transistors) are arranged for pixels, respectively, are often used. In such a liquid crystal display, typically, pixels are individually driven by line-sequentially writing an image signal to auxiliary capacitive elements and liquid crystal elements of the pixels from the top to the bottom of a screen.

In the liquid crystal display, depending on applications, a drive (hereinafter referred to as time-division drive) for dividing one frame period into a plurality of periods and displaying different images in the respective periods is performed. Examples of a liquid crystal display using such a time-division drive system include a stereoscopic image display system using shutter glasses as described in Japanese Unexamined Patent Application Publication No. 2000-4451, a stereoscopic image display system using polarizing filter glasses and the like. In recent years, contents for a stereoscopic image are increased, so televisions allowed to display stereoscopic images have been increasingly developed.

In the stereoscopic image display system using the shutter glasses, one frame period is divided into two periods, and two images which have a parallax therebetween as an image-for-right-eye and an image-for-left-eye are alternately displayed. Moreover, shutter glasses performing an opening/closing operation in synchronization with switching of the images are used. The shutter glasses are controlled so that a left-eye lens is opened (a right-eye lens is closed) in an image-for-left-eye displaying period and the right-eye lens is opened (the left-eye lens is closed) in an image-for-right-eye displaying period. When a viewer wearing such shutter glasses watches display images, stereoscopic vision is achieved.

In the case of two-dimensional (2D) image display in related art, when a frame rate converting process (a frame interpolation process) or image processing (for example, a sharpness process or the like) for improving image quality is performed, a motion vector along an X-Y plane of an image is detected and often used as described in Japanese Unexamined Patent Application Publication No. 2006-66987. Therefore, also in the case of stereoscopic (3D) image display, in order to reduce the generation of flickers or the like caused by displaying two images for right and left eyes in a time-divisional manner or to perform the same image processing as in the case of 2D image display, it is considered to use a motion vector.

However, in stereoscopic image display systems in related art, as in the case of 2D image display in related art, only a two-dimensional motion vector along an X-Y plane of an image is detected and used. In other words, a motion vector along a Z-axis direction (a direction perpendicular to a screen, a depth direction) in stereoscopic image display is not detected and used. Therefore, it is difficult to perform a frame interpolation process or image processing using information pertaining to the Z-axis direction (the motion vector or the like along the Z-axis direction), and it is difficult to perform an effective image quality improvement process (for having a more natural sense of depth) specific to stereoscopic display. In addition, the above-described issues may occur not only in liquid crystal displays but also displays of other kinds.

It is desirable to provide an image signal processing apparatus and an image display which are allowed to achieve stereoscopic image display with a more natural sense of depth.

According to at least an example embodiment of the invention, there is provided an image signal processing apparatus including: a first motion vector detection section detecting one or more two-dimensional motion vectors as motion vectors along an X-Y plane of an image, from an image-for-left-eye and an image-for-right-eye which have a parallax therebetween; and an information obtaining section obtaining, based on the detected two-dimensional motion vectors, information pertaining to a Z-axis direction which is a depth direction in a stereoscopic image formed with the image-for-left-eye and the image-for-right-eye.

According to at least an example embodiment of the invention, there is provided an image display including: the above-described first motion vector detection section; the above-described information obtaining section; a frame interpolation section performing a frame interpolation process on the image-for-left-eye with use of the two-dimensional motion vector detected from the image-for-left-eye, and performing a frame interpolation process on the image-for-right-eye with use of the two-dimensional motion vector detected from the image-for-right-eye; an image quality improvement section performing an image quality improvement process on the image-for-left-eye and the image-for-right-eye which have been subjected to the frame interpolation process, with use of the information pertaining to Z-axis direction; and a display section alternately displaying, in a time-divisional manner, the image-for-left-eye and the image-for-right-eye which have been subjected to the image quality improvement process.

In the image signal processing apparatus and the image display according to at least an example embodiment of the invention, the two-dimensional motion vectors as motion vectors along the X-Y plane of the image are detected from the image-for-left-eye and the image-for-right-eye which have a parallax therebetween. Then, based on the detected two-dimensional motion vectors, information pertaining to the Z-axis direction which is a depth direction in the stereoscopic image formed with the image-for-left-eye and the image-for-right-eye is obtained.

In particular, in the image display according to at least an example embodiment of the invention, a frame interpolation process is performed on the image-for-left-eye and the image-for-right-eye with use of two-dimensional motion vectors detected from the image-for-left-eye and the image-for-right-eye, respectively. Moreover, an image quality improvement process is performed on the image-for-left-eye and the image-for-right-eye which have been subjected to the frame interpolation process with use of the information pertaining to the Z-axis direction. Then, the image-for-left-eye and the image-for-right-eye which have been subjected to the image quality improvement process are alternately displayed in a time-divisional manner. Thereby, the generation of flickers in stereoscopic image display is reduced by the frame interpolation process with use of the two-dimensional motion vectors, and an image quality improvement process with use of the obtained information pertaining to the Z-axis direction is allowed, so compared to stereoscopic image display in related art, an effective improvement in image quality (stereoscopic image display with a more natural sense of depth) is allowed.

In the image signal processing apparatus and the image display according to at least an example embodiment of the invention, the two-dimensional motion vectors as motion vectors along the X-Y plane of the image are detected from the image-for-left-eye and the image-for-right-eye which have a parallax therebetween, and information pertaining to the Z-axis direction which is a depth direction in a stereoscopic image formed with the image-for-left-eye and the image-for-right-eye is obtained based on the detected two-dimensional motion vectors, so stereoscopic image display with a more natural sense of depth is achievable.

Other and further objects, features and advantages of the invention will appear more fully from the following description.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.
FIG. 1 is a block diagram illustrating the whole configuration of a stereoscopic image display system including an image signal processing apparatus (an image signal processing section) according to a first example embodiment of the invention.
FIG. 2 is a circuit diagram illustrating a specific configuration example of a pixel illustrated in FIG. 1.
FIG. 3 is a block diagram illustrating a specific configuration example of the image signal processing section illustrated in FIG. 1.
FIG. 4 is a block diagram illustrating a configuration example of a sharpness process section as an example of an image quality improvement section illustrated in FIG. 3.
FIG. 5 is a block diagram illustrating a specific configuration example of a gain calculation section illustrated in FIG. 4.
FIGs. 6A and 6B are schematic views illustrating an example of transmission formats of right-eye images and left-eye images.
FIGs. 7A and 7B are schematic views briefly illustrating a stereoscopic image display operation in the stereoscopic image display system illustrated in FIG. 1.
FIG. 8 is a schematic view for describing motion vectors in a right-eye image and a left-eye image in stereoscopic image display.
FIG. 9 is a block diagram illustrating an image signal processing section performing a frame interpolation process using an XY-axis motion vector in a 2D image display in related art according to Comparative Example 1.
FIG. 10 is a timing chart for describing the frame interpolation process according to Comparative Example 1 illustrated in FIG. 9.
FIG. 11 is a block diagram illustrating an image signal processing section performing a frame interpolation process using an XY-axis motion vector in a stereoscopic (3D) display according to Comparative Example 2.
FIG. 12 is a schematic view for describing a Z-axis motion vector according to the first embodiment.
FIG. 13 is a timing chart illustrating an example of a method of obtaining the Z-axis motion vector and Z-axis position information according to the first example embodiment.
FIG. 14 is a block diagram illustrating a specific configuration example of an image signal processing section according to a second example embodiment.
FIG. 15 is a block diagram illustrating an image signal processing section performing a process of producing and superimposing a test pattern and an OSD pattern in a stereoscopic image display according to Comparative Example 3.
FIG. 16 is a schematic view illustrating an example of a test pattern according to Comparative Example 3 illustrated in FIG. 15.
FIG. 17 is a schematic view illustrating an example of an OSD pattern according to Comparative Example 3 illustrated in FIG. 15.
FIG. 18 is a schematic view for describing display of the OSD pattern according to Comparative Example 3 illustrated in FIG. 15.
FIG. 19 is a schematic view illustrating an example of a test pattern according to the second example embodiment.
FIGs. 20A and 20B are schematic views illustrating an example of a right-eye test pattern and a left-eye test pattern on an A-plane illustrated in FIG. 19.
FIGs. 21A and 21B are schematic views illustrating an example of a right-eye test pattern and a left-eye test pattern on a B-plane illustrated in FIG. 19.
FIGs. 22A and 22B are schematic views illustrating an example of a right-eye test pattern and a left-eye test pattern on a C-plane illustrated in FIG. 19.
FIG. 23 is a schematic view illustrating an example of an OSD pattern according to the second example embodiment.
FIGs. 24A and 24B are schematic views illustrating an example of a right-eye OSD pattern and a left-eye OSD pattern on an A-plane illustrated in FIG. 23.
FIGs. 25A and 25B are schematic views illustrating an example of a right-eye OSD pattern and a left-eye OSD pattern on a B-plane illustrated in FIG. 23.
FIGs. 26A and 26B are schematic views illustrating an example of a right-eye OSD pattern and a left-eye OSD pattern on a C-plane illustrated in FIG. 23.
FIG. 27 is a schematic view for describing display of an OSD pattern according to the second example embodiment.
FIG. 28 is a schematic view for describing a Z-axis coordinate indicator using display of the OSD pattern according to the second example embodiment.

Preferred embodiments will be described in detail below referring to the accompanying drawings. In addition, descriptions will be given in the following order.
1. First Example Embodiment (Example of method of obtaining and using a Z-axis motion vector and Z-axis position information)
2. Second Example Embodiment (Example of test/OSD pattern display in stereoscopic image display)
3. Modifications

### First Example Embodiment

### Whole configuration of stereoscopic image display system

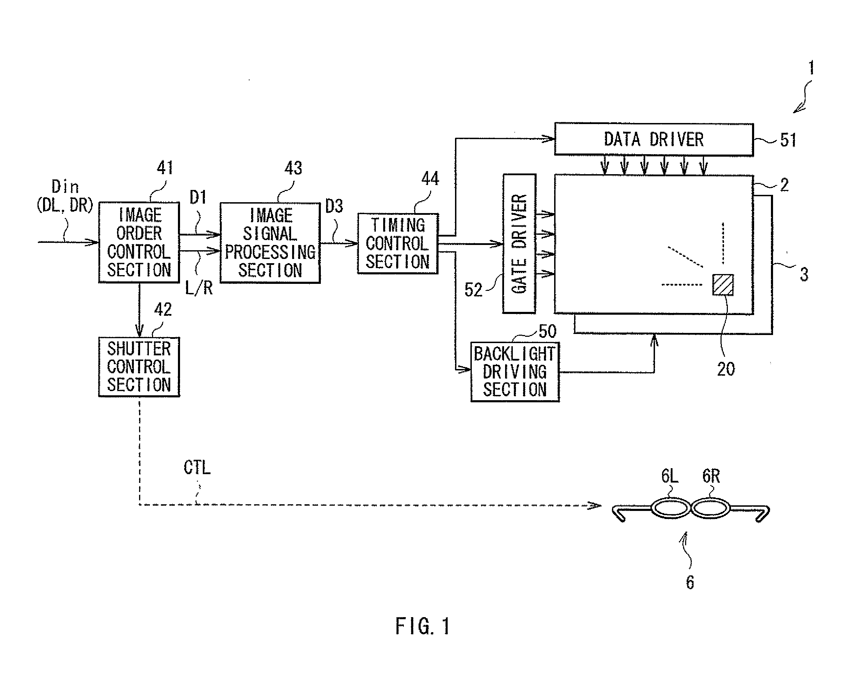

FIG. 1 illustrates a block diagram of a stereoscopic image display system according to a first embodiment of the invention. The stereoscopic image display system is a time-division drive stereoscopic image display system, and includes an image display (a liquid crystal display 1) according to a first embodiment of the invention and shutter glasses 6.

### Configuration of liquid crystal display 1

The liquid crystal display 1 displays an image based on an input image signal Din including a right-eye image signal DR (each image signal for right eye belonging to an image stream for right eye) and a left-eye image signal DL (each image signal for left eye belonging to an image stream for left eye) having a binocular parallax. The liquid crystal display 1 includes a liquid crystal display panel 2, a backlight 3, an image order control section 41, a shutter control section 42, an image signal processing section 43, a timing control section 44, a backlight driving section 50, a data driver 51 and a gate driver 52. In addition, the image signal processing section 43 corresponds to a specific example of "an image signal processing apparatus" in the invention.

The backlight 3 is a light source applying light to the liquid crystal display panel 2, and includes, for example, an LED (Light Emitting Diode), a CCFL (Cold Cathode Fluorescent Lamp) or the like.

The liquid crystal display panel 2 modulates light emitted from the backlight 3 based on an image voltage supplied from the data driver 51 in response to a drive signal supplied from the gate driver 52 which will be described later so as to display an image based on the input image signal Din. More specifically, as will be described in detail later, an image-for-right-eye (each unit image for right eye belonging to an image stream for right eye) based on the right-eye image signal DR and an image-for-left-eye (each unit image for left eye belonging to an image stream for left eye) based on the left-eye image signal DL are alternately displayed in a time-divisional manner. In other words, in the liquid crystal display panel 2, images are displayed in output order controlled by the image order control section 41 which will be described later to perform a time division drive for stereoscopic image display. The liquid crystal display panel 2 includes a plurality of pixels 20 arranged in a matrix form as a whole.

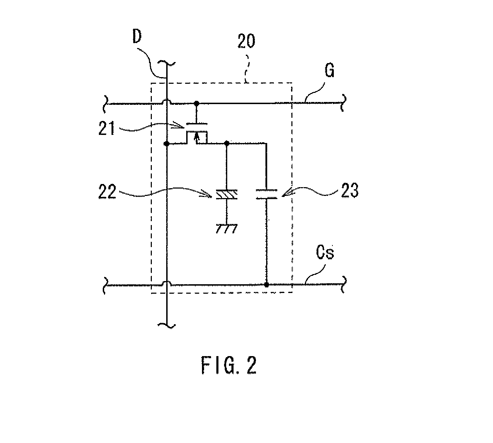

FIG. 2 illustrates a circuit configuration example of a pixel circuit in each pixel 20. The pixel 20 includes a liquid crystal element 22, a TFT (Thin Film Transistor) element 21 and an auxiliary capacitive element 23. A gate line G for line-sequentially selecting a pixel to be driven, a data line D for supplying an image voltage (an image voltage supplied from the data driver 51) to the pixel to be driven and an auxiliary capacity line Cs are connected to the pixel 20.

The liquid crystal element 22 performs a display operation in response to an image voltage supplied from the data line D to one end thereof through the TFT element 21. The liquid crystal element 22 is configured by sandwiching a liquid crystal layer (not illustrated) made of, for example, a VA (Vertical Alignment) mode or TN (Twisted Nematic) mode liquid crystal between a pair of electrodes (not illustrated). One (one end) of the pair of electrodes in the liquid crystal element 22 is connected to a drain of the TFT element 21 and one end of the auxiliary capacitive element 23, and the other (the other end) of the pair of electrodes is grounded. The auxiliary capacitive element 23 is a capacitive element for stabilizing an accumulated charge of the liquid crystal element 22. One end of the auxiliary capacitive element 23 is connected to the one end of the liquid crystal element 22 and the drain of the TFT element 21, and the other end of the auxiliary capacitive element 23 is connected to the auxiliary capacity line Cs. The TFT element 21 is a switching element for supplying an image voltage based on an image signal D1 to the one end of the liquid crystal element 22 and the one end of the auxiliary capacitive element 23, and is configured of a MOS-FET (Metal Oxide Semiconductor-Field Effect Transistor). A gate and a source of the TFT element 21 are connected to the gate line G and the data line D, respectively, and the drain of the TFT element 21 is connected to the one end of the liquid crystal element 22 and the one end of the auxiliary capacitive element 23.

The image order control section 41 controls output order (writing order, display order) of the right-eye image signal DR and the left-eye image signal DL to the input image signal Din so as to produce the image signal D1. More specifically, the image order control section 41 controls the output order so that the right-eye image signal DR and the left-eye image signal DL are alternately outputted in a time-divisional manner. In other words, in this case, the image signal D1 is produced so that the right-eye image signal DR and the left-eye image signal DL are outputted in order of the left-eye image signal DL, the right-eye image signal DR, the left-eye image signal DL, .... The image order control section 41 also outputs, to the image signal processing section 43, a flag (an LR determining flag L/R) indicating whether a currently outputted image signal D1 is the left-eye image signal DL (D1L) or the right-eye image signal DR (D1R). In addition, hereinafter a period where the left-eye image signal DL is outputted (written) and a period where the right-eye image signal DR is outputted (written) of one frame period are referred to as "L sub-frame period" and "R sub-frame period", respectively.

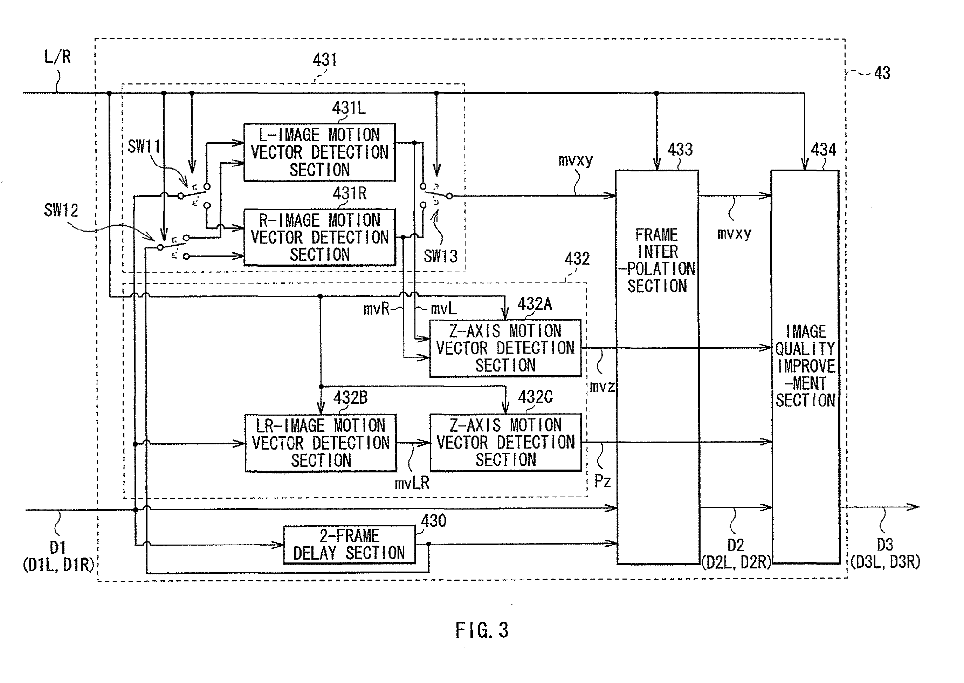

The image signal processing section 43 performs image signal processing which will be described later with use of the image signal D1 (D1L, D1R) and the LR determining flag L/R supplied from the image order control section 41 so as to produce an image signal D3 (D3L, D3R). More specifically, as will be described later, information pertaining to a depth direction (a Z-axis direction) in a stereoscopic image is obtained based on a motion vector (an XY-axis motion vector mvxy) along an X-Y plane of an image, and an image quality improvement process with use of the information is performed. In addition, the configuration of the image signal processing section 43 will be described in detail later (refer to FIGs. 3 to 5).

The timing control section 44 controls drive timings of the backlight driving section 50, the gate driver 52 and the data driver 51, and supplies, to the data driver 51, the image signal D3 supplied from the image signal processing section 43.

The gate driver 52 line-sequentially drives the pixels 20 in the liquid crystal display panel 2 along the above-described gate line G in response to timing control by the timing control section 44.

The data driver 51 supplies, to each of the pixels 20 of the liquid crystal display panel 2, an image voltage based on the image signal D3 supplied from the timing control section 44. More specifically, the data driver 51 performs D/A (digital/analog) conversion on the image signal D3 to produce an image signal (the above-described image voltage) as an analog signal to output the analog signal to each of the pixels 20.

The backlight driving section 50 controls a lighting operation (a light emission operation) of the backlight 3 in response to timing control by the timing control section 44. However, in the embodiment, such a lighting operation (light emission operation) of the backlight 3 may not be controlled.

### Configurations of shutter control section 42 and shutter glasses 6

The shutter control section 42 outputs, to the shutter glasses 6, a timing control signal (a control signal CTL) corresponding to output timings of the right-eye image signal DR and the left-eye image signal DL by the image order control section 41. In addition, in this case, the control signal CTL is described as a radio signal such as, for example, an infrared signal, but may be a wired signal.

When a viewer (not illustrated in FIG. 1) of the liquid crystal display 1 wears the shutter glasses 6, stereoscopic vision is achieved. The shutter glasses 6 include a left-eye lens 6L and a right-eye lens 6R, and light-shielding shutters (not illustrated) such as, for example, liquid crystal shutters are arranged on the left-eye lens 6L and the right-eye lens 6R, respectively. An effective state (an open state) and an ineffective state (a close state) of a light-shielding function in each of the light-shielding shutters are controlled by the control signal CTL supplied form the shutter control section 42. More specifically, as will be described later, the shutter control section 42 controls the shutter glasses 6 so as to alternately change the open/close states of the left-eye lens 6L and the right-eye lens 6R in synchronization with switching of the image-for-left-eye and the image-for-right-eye.

### Specific configuration of image signal processing section 43

Now, referring to FIGs. 3 to 5, the configuration of the image signal processing section 43 will be described in detail below. FIG. 3 illustrates a block diagram of the image signal processing section 43.

The image signal processing section 43 includes a 2-frame delay section 430, an XY-axis motion vector detection section 431, a Z-axis information obtaining section 432, a frame interpolation section 433 and an image quality improvement section 434.

The 2-frame delay section 430 is a frame memory for delaying each of the left-eye image signal D1L and the right-eye image signal D1R in the image signal D1 by two frames.

The XY-axis motion vector detection section 431 determines the above-described XY-axis motion vector mvxy using the left-eye image signal D1L and the right-eye image signal D1R in a frame preceding a current left-eye image signal D1L and a current right-eye image signal D1R by two frames and the current left-eye image signal D1L and the current right-eye image signal D1R. The XY-axis motion vector detection section 431 includes an L-image motion vector detection section 431 L, an R-image motion vector detection section 431R and three switches SW11, SW12 and SW13. In addition, the XY-axis motion vector detection section 431 corresponds to a specific example of "a first motion vector detection section" in the invention.

The switch SW11 is a switch for distributing a current image signal D1 to the L-image motion vector detection section 431 L or the R-image motion vector detection section 431R according to the state of the LR determining flag L/R. More specifically, in the case where the state of the LR determining flag L/R is "an image-for-left-eye", the current image signal D1 is considered as the left-eye image signal D1L, and the left-eye image signal D1L is supplied to the L-image motion vector detection section 431 L. On the other hand, in the case where the state of the LR determining flag L/R is "an image-for-right-eye", the current image signal D1 is considered as the right-eye image signal D1R, and the right-eye image signal D1R is supplied to the R-image motion vector detection section 431R.

Likewise, the switch SW12 is a switch for distributing the image signal D1 preceding the current image signal D1 by two frames to the L-image motion vector detection section 431 L or the R-image motion vector detection section 431 R according to the state of the LR determining flag L/R. More specifically, in the case where the state of the LR determining flag L/R is "an image-for-left-eye", the image signal D1 preceding the current image signal D1 by two frames is considered as the left-eye image signal D1L, and the left-eye image signal D1L is supplied to the L-image motion vector detection section 431 L. On the other hand, in the case where the state of the LR determining flag L/R is "an image-for-right-eye", the image signal D1 preceding the current image signal D1 by two frames is considered as the right-eye image signal D1R, and the right-eye image signal D1R is supplied to the R-image motion vector detection section 431R.

The L-image motion vector detection section 431L determines an XY-axis motion vector mvL in the left-eye image signal D1L with use of the left-eye image signal D1L which precedes the current left-eye image signal D1L by two frames and is supplied from the switch SW12 and the current left-eye image signal D1L which is supplied from the switch SW11.

The R-image motion vector detection section 431R determines an XY-axis motion vector mvR in the right-eye image signal D1R with use of the right-eye image signal D1R which precedes the current right-eye image signal D1R by two frames and is supplied from the SW12 and the current right-eye image signal D1R which is supplied from the switch SW11.

The switch SW13 is a switch for selectively outputting the XY-axis motion vector mvL outputted from the L-image motion vector detection section 431 L and the XY-axis motion vector mvR outputted from the R-image motion vector detection section 431R according to the state of the LR determining flag L/R. More specifically, in the case where the state of the LR determining flag L/R is "an image-for-left-eye", the XY-axis motion vector mvL in the left-eye image signal D1L is outputted as the XY-axis motion vector mvxy. On the other hand, in the case where the state of the LR determining flag L/R is "an image-for-right-eye", the XY-axis motion vector mvR in the right-eye image signal D1R is outputted as the XY-axis motion vector mvxy.

The Z-axis information obtaining section 432 obtains information pertaining to a depth direction (the Z-axis direction) in a stereoscopic image based on the LR determining flag L/R, the current image signal D1 and the XY-axis motion vectors mvL and mvR detected by the XY-axis motion vector detection section 431. More specifically, in this case, as the information pertaining to the Z-axis direction, a Z-axis motion vector mvz as a motion vector along the Z-axis direction and Z-axis position information Pz along the Z-axis direction of a stereoscopic image are obtained. The Z-axis information obtaining section 432 includes a Z-axis motion vector detection section 432A, an LR-image motion vector detection section 432B and a Z-axis position information detection section 432C.

The Z-axis motion vector detection section 432A determines the Z-axis motion vector mvz based on the LR determining flag L/R and the XY-axis motion vectors mvL and mvR. More specifically, a difference (=mvL-mvR) between the XY-axis motion vector mvL in the left-eye image signal D1L and the XY-axis motion vector mvR in the right-eye image signal D1R is determined so as to obtain the Z-axis motion vector mvz. In addition, the Z-axis motion vector detection section 432A corresponds to a specific example of "a second motion vector detection section" in the invention. Moreover, a process of obtaining the Z-axis motion vector mvz will be described in detail later.

The LR-image motion vector detection section 432B determines an XY-axis motion vector mvLR (a left-right motion vector) corresponding to a difference of moving part between the left-eye image signal D1L and the right-eye image signal D1R based on the LR determining flag L/R and the current image signal D1. In addition, the LR-image motion vector detection section 432B corresponds to a specific example of "a first motion vector detection section" in the invention. Moreover, a process of obtaining the XY-axis motion vector mvLR will be described in detail later.

The Z-axis position information detection section 432C determines the Z-axis position information Pz based on the XY-axis motion vector mvLR determined by the LR-image motion vector detection section 432B and the LR determining flag L/R. In addition, a process of obtaining the Z-axis position information Pz will be described in detail later.

The frame interpolation section 433 performs a frame interpolation process individually on the left-eye image signal D1L and the right-eye image signal D1R based on the LR determining flag L/R, the current image signal D1 and the image signal D1 preceding the current image signal D1 by two frames, and the XY-axis motion vector mvxy. More specifically, a frame interpolation process (a frame-rate enhancement process) which is similar to a process used in 2D image display in related art is performed so as to produce an image signal D2 configured of a left-eye image signal D2L and a right-eye image signal D2R.

The image quality improvement section 434 performs a predetermined image quality improvement process on the left-eye image signal D2L and the right-eye image signal D2R obtained by the frame interpolation process with use of the LR determining flag L/R, the XY-axis motion vector mvxy, the Z-axis motion vector mvz and the Z-axis position information Pz. Thereby, an image signal D3 (configured of a left-eye image signal D3L and a right-eye image signal D3R) obtained by the image quality improvement process is outputted from the image signal processing section 43. Examples of such an image quality improvement process include a sharpness process, a color enhancement process (such as an HSV color space process), a noise reduction process, an error diffusion process, an image/brightness process, a white balance adjustment process, a process of lowering of black level and the like. Moreover, in addition to these image quality improvement processes, for example, a sound quality enhancement process (for example, a process of turning up a sound in the case of a stereoscopic image in which an image moves forward) may be performed with use of the Z-axis motion vector mvz or the Z-axis position information Pz.

### Specific configuration of sharpness process section 434-1

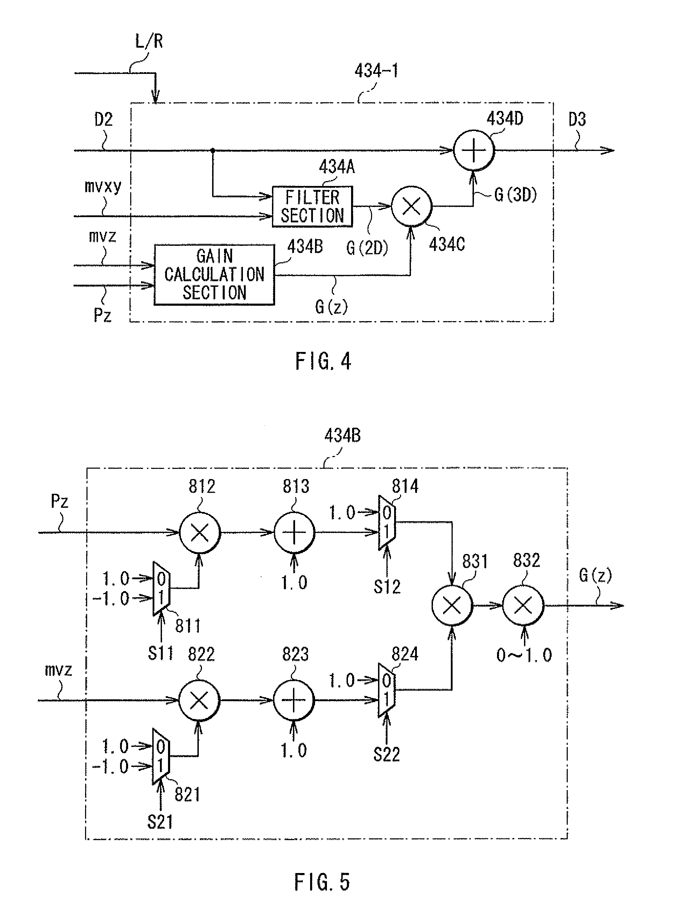

FIG. 4 illustrates a block diagram of a sharpness process section 434-1 performing the above-described sharpness process as an example of the image quality improvement section 434. The sharpness process section 434-1 includes a filter section 434A, a gain calculation section 434B, a multiplication section 434C and an addition section 434D. In addition, in FIG. 4, to simplify the drawing, only a block where the sharpness process is performed on one of the left-eye image signals D2L and D3L and the right-eye image signals D2R and D3R is illustrated, but a block where the sharpness process is performed on the other has the same configuration.

The filter section 434A performs a predetermined filter process (high-pass filter (HPF) process) based on the image signal D2 and the XY-axis motion vector mvxy so as to extract a two-dimensional sharpness component along the X-axis direction and the Y-axis direction. Thereby, a gain value (a two-dimensional gain value G(2D)) in a two-dimensional sharpness process is determined.

The gain calculation section 434B performs a gain calculation process which will be described later based on the Z-axis motion vector mvz and the Z-axis position information Pz so as to determine a gain value (a Z-axis gain value G(z)) in a sharpness process along the Z-axis direction. In addition, as will be described later, the magnitude of the Z-axis gain value G(z) is set according to the magnitude and the direction of the Z-axis motion vector mvz or the Z-axis position information Pz.

The multiplication section 434C multiplies the two-dimensional gain value G(2D) outputted from the filter section 434A by the Z-axis gain value G(z) outputted from the gain calculation section 434B. Thereby, a gain value (a three-dimensional gain value G(3D)) in a three-dimensional sharpness process along the X-axis direction, the Y-axis direction and the Z-axis direction is determined. In other words, in this case, the three-dimensional gain value G(3D) as a final gain value in the sharpness process section 434-1 is determined in consideration of the two-dimensional gain value G(2D) and the Z-axis gain value G(z).

The addition section 434D performs a sharpness process using the three-dimensional gain value G(3D) by adding the three-dimensional gain value G(3D) to the image signal D2. Thereby, the image signal D3 obtained by the sharpness process is outputted from the sharpness process section 434-1.

FIG. 5 illustrates a block diagram of the above-described gain calculation section 434B. The gain calculation section 434B includes four selectors 811, 814, 821 and 824, four multiplication sections 812, 822, 831 and 832 and two addition sections 813 and 823.

The selector 811 selectively outputs a value of "1.0" or "-1.0" according to the value of a selection signal S11, and has a function for performing position reversal corresponding to a value (polarity) in the Z-axis position information Pz. More specifically, when the value of the selection signal S11 is "0", the value of "1.0" is outputted according to the value of the Z-axis position information Pz so that an image in a front position on the Z axis is sharpened. On the other hand, in the case where the value of the selection signal S11 is "1", the value of "-1.0" is outputted according to the value of the Z-axis position information Pz so that an image in a back position on the Z-axis is sharpened.

The multiplication section 812 multiplies the value of the Z-axis position information Pz by a value ("1.0" or "-1.0") outputted from the selector 811. As an example, the value of the Z-axis position information Pz falls in a range of -1.0 (corresponding to the back position in the Z-axis direction)-0 (corresponding to an original position on the Z axis)-1.0 (corresponding to the front position in the Z-axis direction), that is, a range of -1.0≤Pz≤1.0. The addition section 813 adds the value of "1.0" as an offset value to an output value from the multiplication section 812. Thereby, an output value from the addition section 813 is a value ranging from 0 to 2.0 both inclusive.

The selector 814 selectively outputs the value of "1.0" or the output value from the addition section 813 according to the value of a selection signal S12, and has a function for determining whether or not the Z-axis position information Pz is reflected on the Z-axis gain value G(z). More specifically, in the case where the value of a selection signal S 12 is "0", the value of "1.0" as a fixed value is outputted so as not to reflect the Z-axis position information Pz on the Z-axis gain value G(z). On the other hand, in the case where the value of the selection signal S12 is "1", the output value from the addition section 813 is outputted so as to reflect the Z-axis position information Pz on the Z-axis gain value G(z).

The selector 821 selectively outputs "1.0" or "-1.0" according to the value of a selection signal S21, and has a function for performing position reversal corresponding to a value (polarity) in the Z-axis motion vector. More specifically, in the case where the value of the selection signal S21 is "0", the value of "1.0" is outputted according to the value of the Z-axis motion vector so as to sharpen an image when moving toward the front on the Z axis (when moving forward). On the other hand, in the case where the value of the selection signal S21 is "1", the value of "-1.0" is outputted according to the value of the Z-axis motion vector so as to sharpen the image when moving toward the back on the Z axis (when moving rearward).

The multiplication section 822 multiplies the value of the Z-axis motion vector mvz by a value outputted ("1.0" or "-1.0) from the selector 821. As an example, the value of the Z-axis motion vector mvz falls in a range of -1.0 (corresponding to the case where the image moves rearward)-0 (corresponding to the case where the image is stationary)-1.0 (corresponding to the case where the image moves forward), that is, a range of -1.0≤mvz≤1.0. The addition section 823 adds the value of "1.0" as an offset value to an output value from the multiplication section 822. Thereby, the output value from the addition section 823 falls in a value ranging from 0 to 2.0 both inclusive.

The selector 824 selectively outputs the value of "1.0" or the output value from the addition section 823 according to the value of a selection signal S22, and has a function for determining whether or not the Z-axis motion vector mvz is reflected on the Z-axis gain value G(z). More specifically, in the case where the value of the selection signal S22 is "0", the value of "1,0" as a fixed value is outputted so as not to reflect the Z-axis motion vector mvz on the Z-axis gain value G(z). On the other hand, in the case where the value of the selection signal S22 is "1", the output value from the addition section 823 is outputted so as to reflect the Z-axis motion vector mvz on the Z-axis gain value G(z).

The multiplication section 831 multiplies an output value from the selector 814 corresponding to the Z-axis position information Pz by an output value from the selector 824 corresponding to the Z-axis motion vector mvz. Thereby, an output value from the multiplication section 831 falls in a value ranging from 0 to 4.0 both inclusive. The multiplication section 832 multiplies an output value from the multiplication section 831 by a value of "0" to "1.0" as a value for normalization so as to determine the Z-axis gain value G(z).

### Functions and effects of stereoscopic image display system

Next, functions and effects of the stereoscopic image display system according to the embodiment will be described below.

### 1. Stereoscopic image display operation

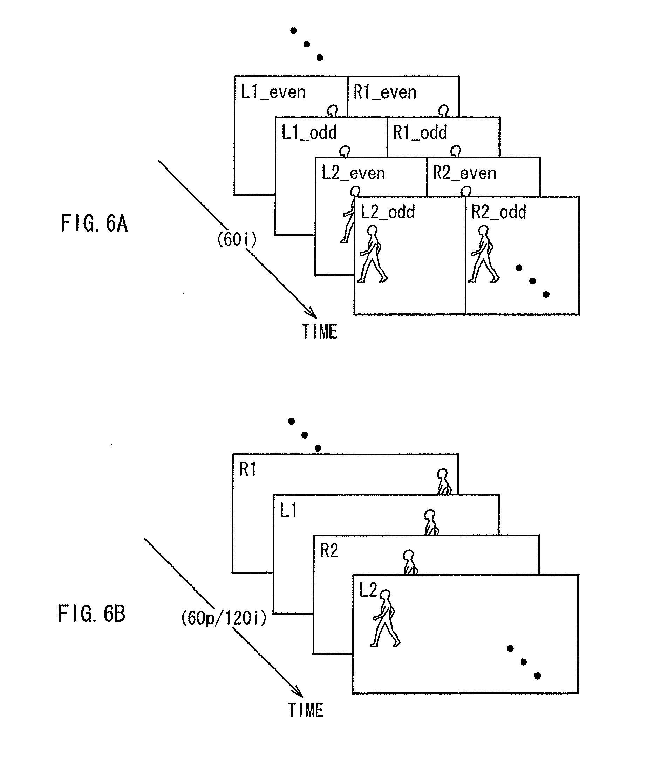

First, referring to FIGs. 6A and 6B to 8 in addition to FIGs. 1 and 2, a stereoscopic image display operation in the stereoscopic image display system will be briefly described below.

In the image display system, as illustrated in FIG. 1, in the liquid crystal display 1, first, the image order control section 41 controls output order (writing order, display order) of the right-eye image signal DR and the left-eye image signal DL on the input image signal Din to produce the image signal D1. More specifically, examples of a signal format of the input image signal Din corresponding to a stereoscopic image include signal formats illustrated in FIGs. 6A and 6B, that is, a "side-by-side format" illustrated in FIG. 6A and a "frame sequential" format illustrated in FIG. 6B. Stereoscopic vision is achievable by separately transmitting information about an L-image (the left-eye image signal DL) and information about an R-image (the right-eye image signal DR) to one frame or respective frames as in the case of these signal formats. In this case, in the "side-by-side format" illustrated in FIG. 6A, in each frame (for example, 60i), an L-image (L1_even, L1_odd, L2_even or L2_odd) and an R-image (R1_even R1_odd, R2_even or R2_odd) are allocated to a left half (on an L side) and a right half (on an R side) of an image, respectively. On the other hand, in the "frame sequential" format in FIG. 6B, L-images (L1 and L2) and R-images (R1 and R2) are allocated to frames (60p/120i), respectively.

Next, the shutter control section 42 outputs the control signal CTL corresponding to output timings of such a right-eye image signal DR and such a left-eye image signal DL to the shutter glasses 6. Moreover, the image signal D1 outputted from the image order control section 41 and the LR determining flag L/R are inputted into the image signal processing section 43. In the image signal processing section 43, image signal processing which will be described later is performed based on the image signal D1 and the LR determining flag L/R to produce the image signal D3. The image signal D3 is supplied to the data driver 51 through the timing control section 44. The data driver 51 performs D/A conversion on the image signal D1 to produce an image voltage as an analog signal. Then, a display drive operation is performed by a drive voltage outputted from the gate driver 52 and the data driver 51 to each pixel 20.

More specifically, as illustrated in FIG. 2, ON/OFF operations of the TFT element 21 are switched in response to a selection signal supplied from the gate driver 52 through the gate line G. Thereby, conduction is selectively established between the data line D and the liquid crystal element 22 and the auxiliary capacitive element 23. As a result, an image voltage based on the image signal D3 supplied from the data driver 51 is supplied to the liquid crystal element 22, and a line-sequential display drive operation is performed.

In the pixels 20 to which the image voltage is supplied in such a manner, illumination light from the backlight 3 is modulated in the liquid crystal display panel 2 to be emitted as display light. Thereby, an image based on the input image signal Din is displayed on the liquid crystal display 1. More specifically, in one frame period, an image-for-left-eye based on the left-eye image signal DL and an image-for-right-eye based on the right-eye image signal DR are alternately displayed to perform a display drive operation by a time division drive.

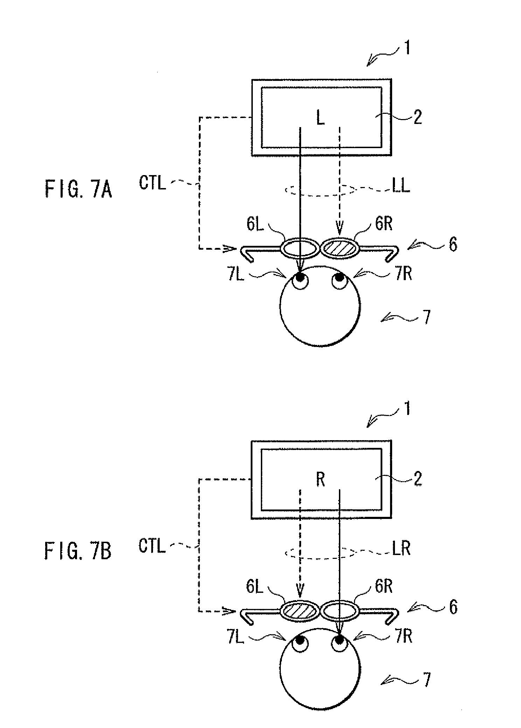

At this time, as illustrated in FIG. 7A, when the image-for-left-eye is displayed, in the shutter glasses 6 used by a viewer 7, in response to the control signal CTL, a light-shielding function in the right-eye lens 6R is turned into an effective state, and the light-shielding function in the left-eye lens 6L is turned into an ineffective state. In other words, the left-eye lens 6L is turned into an open state for transmission of display light LL for display of the image-for-left-eye, and the right-eye lens 6R is turned into a close state for transmission of the display light LL. On the other hand, as illustrated in FIG. 7B, when the image-for-right-eye is displayed, in response to the control signal CTL, the light-shielding function in the left-eye lens 6L is turned into an effective state, and the light-shielding function in the right-eye lens 6R it turned into an ineffective state. In other words, the right-eye lens 6R is turned into an open state for transmission of display light LR for display of the image-for-right-eye, and the left-eye lens 6L is turned in a close state for transmission of the display light LR. Then, such states are alternately repeated in a time-divisional manner, so when the viewer 7 wearing the shutter glasses 6 watches a display screen of the liquid crystal display 1, a stereoscopic image is viewable. In other words, the viewer 7 is allowed to watch the image-for-left-eye with his left eye 7L and the image-for-right-eye with his right eye 7R, and there is a parallax between the image-for-left-eye and the image-for-right-eye, so the viewer 7 perceives the image-for-right-eye and the image-for-left-eye as a stereoscopic image with a depth.

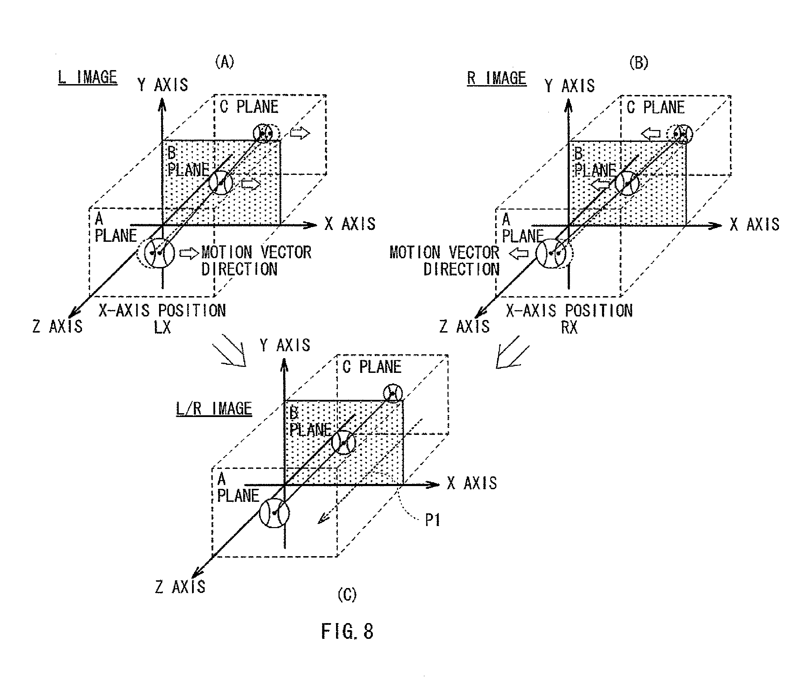

More specifically, a basic stereoscopic effect of human vision is caused by binocular vision, that is, by viewing with both eyes, and when an object is viewed with both eyes, a difference between directions where the eyes view the object is a parallax. A sense of distance or the stereoscopic effect is perceived because of the parallax. Therefore, a parallax in a stereoscopic image is achieved by a difference in position of the object between the image-for-left-eye (the L-image) and the image-for-right-eye (the R-image). For example, as illustrated in parts A and B in FIG. 8, the more forward the object is placed (in an A-plane) than a position (a B-plane) of the liquid crystal display panel 2, the parallax is increased, so a position (an X-axis position Lx) of the object in the L-image is shifted toward the right, and a position (an X-axis position Rx) of the object in the R-image is shifted toward the left. Moreover, in the case where the object is placed in the position (the B-plane) of the liquid crystal display panel 2, the positions of the object in the L-image and the R-image overlap each other. On the other hand, when the object is placed more rearward (in a C-plane) than the position (the B-plane) of the liquid crystal display panel 2, the position (the X-axis position Lx) of the object in the L-image is shifted toward the left, and the position (the X-axis position Rx) of the object in the R-image is shifted toward the right. In other words, in a stereoscopic (3D) image, in addition to an X axis and a Y axis (an XY axis) in a 2D image, a Z axis (a depth) in a direction perpendicular to the liquid crystal display panel 2 is provided by a difference in position of the object between the L-image and the R-image. More specifically, as indicated by an arrow P1 in a part C in FIG. 8, for example, in the case where such moving images that a ball flies from a position (the C-plane) behind the position (the B-plane) of the liquid crystal display panel 2 to a position (the A-plane) in front of the position (the B-plane) of the liquid crystal display panel 2 are displayed, a difference (a deviation) in the position of the object between the L-image and the R-image is as described below_{.} That is, in the A-plane, a shift of the ball toward the right in the L-image and a shift of the ball toward the left in the R-image are at maximum. Moreover, in the B-plane, the shift of the ball in the L-image and the shift of the ball in the R-image are eliminated. Then, in the C-plane, a shift of the ball toward the left in the L-image and a shift of the ball toward the right in the R-image are at maximum. Therefore, when the right and left eyes view the R-image and the L-image where the position of the ball differs, respectively, for example, as illustrated in the part C in FIG. 8, it is perceived as if the ball is present in spaces in front of and behind the liquid crystal display panel 2.

### 2. Operation of obtaining and using information pertaining to Z-axis direction

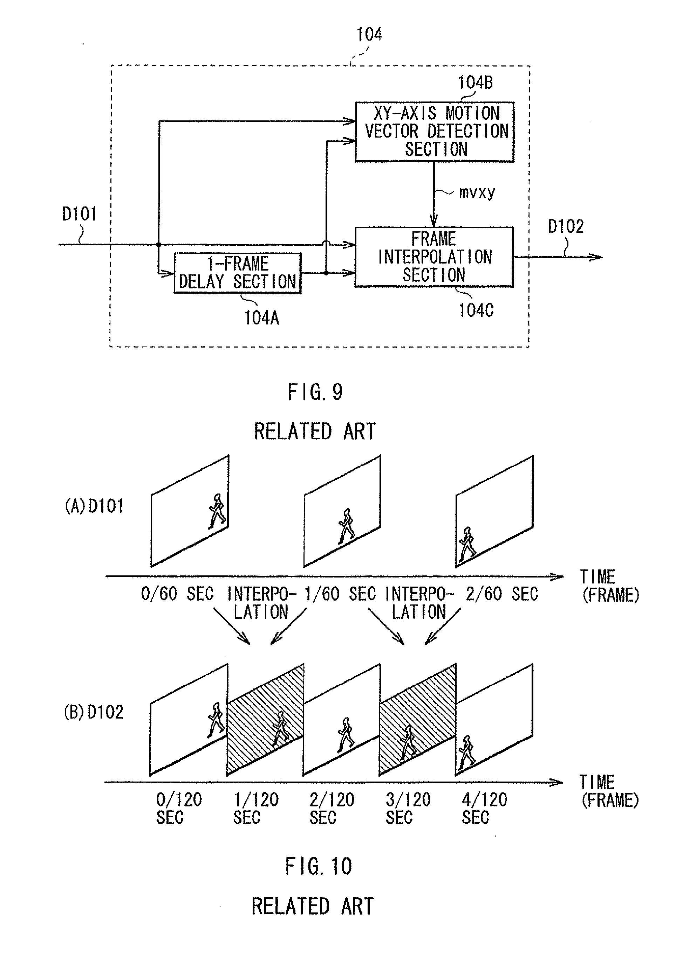

Next, referring to FIGs. 9 to 13, an operation of obtaining and using information pertaining to a Z-axis direction (a direction perpendicular to a screen, a depth direction) as one of characteristics parts of the invention will be described in detail below in comparison with comparative examples.

First, in the case of two-dimensional (2D) image display in related art, when a frame rate conversion process (a frame interpolation process) or image processing for improving image quality is performed, a motion vector along an X-Y plane of an image is often detected and used. In other words, in the frame interpolation process, in the case of the above-described stereoscopic image display, for example, when switching of the L-image and the R-image is performed at a frequency of 60 Hz, flickers are clearly perceived. Therefore, for example, it is necessary to increase the frequency from 60 Hz to 120 Hz or 240 Hz (to perform a frame interpolation process).

### Comparative Example 1

In two-dimensional (2D) image display in related art (Comparative Example 1), a frame interpolation process using a motion vector is performed as described below. FIG. 9 illustrates a block diagram of an image signal processing section 104 performing a frame interpolation process in Comparative Example 1. The image signal processing section 104 includes a one-frame delay section 104A, an XY-axis motion vector detection section 104B and a frame interpolation section 104C.

In the image signal processing section 104, first, in the XY-axis motion vector detection section 104B, the XY-axis motion vector mvxy is detected based on a current image signal D101 and an image signal D101 in the preceding frame supplied from the one-frame delay section 104A. Then, the frame interpolation section 104C performs a frame interpolation process of motion vector correction type using the XY-axis motion vector mvxy to produce an image signal D102. Thereby, motion vector correction type frame number conversion which allows an improvement in image quality is performed (for example, refer to parts A and B in FIG. 10).

### Comparative Example 2

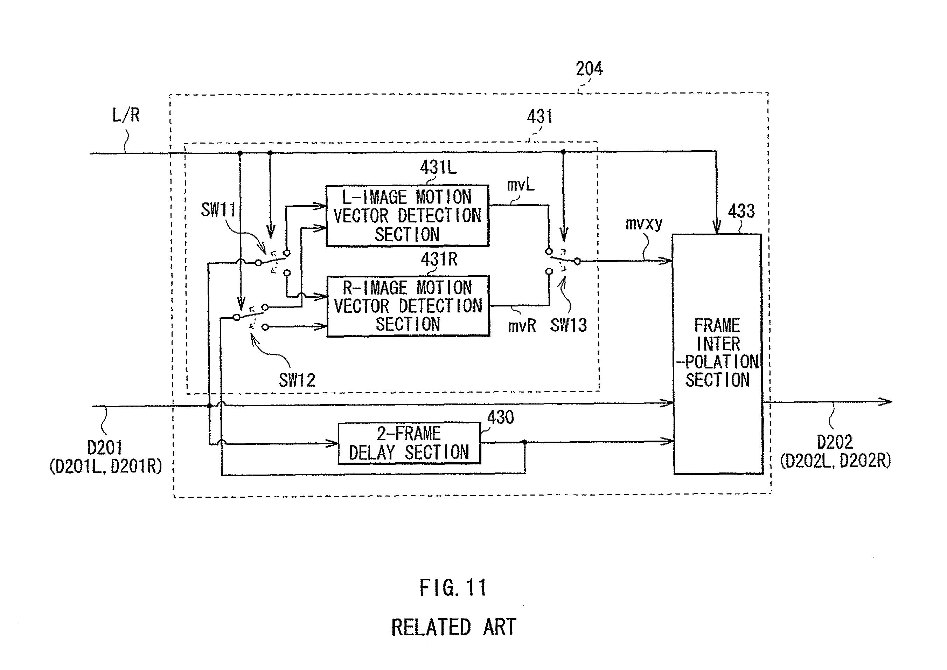

In the case where a frame interpolation process using the XY-axis motion vector in such a 2D image display is applied to a stereoscopic (3D) image display (system), for example, the following takes place. FIG. 11 illustrates a block diagram of an image signal processing section 204 performing a frame interpolation process using an XY-axis motion vector in a stereoscopic image display (system) according to Comparative Example 2. The image signal processing section 204 includes the above-described 2-frame delay section 430, the above-described XY-axis motion vector detection section 431 and the above-described frame interpolation section 433. In other words, the image signal processing section 204 has the same configuration as that of the image signal processing section 34 in the embodiment illustrated in FIG. 3, except that the Z-axis information obtaining section 432 and the image quality improvement section 434 are not provided.

Therefore, in the image signal processing section 204, as in the case of 2D image display in related art according to Comparative Example 1, only a two-dimensional motion vector (an XY-axis motion vector mvxy) along an X-Y plane in the image signal D201 is detected. More specifically, as the L-image and the R-image in a stereoscopic image include depth information, in motion along the Z-axis direction, the direction in motion vector differs between the L-image and the R-image. Therefore, in the XY-axis motion vector detection section 431, the same motion vector detection as in the case of a 2D image according to Comparative Example 1 is performed separately on the L-image and the R-image to prevent an influence of motion along the Z-axis direction. Moreover, in the frame interpolation section 423, motion vector detection results (the XY-axis motion vector mvxy) are used to perform a frame interpolation process separately on the L-image (a left-eye image signal D201L) and the R-image (a right-eye image signal D201R) according to the state of the LR determining flag L/R. Thereby, an image signal D202 which is configured of the L-image (a left-eye image signal D202L) and the R-image (a right-eye image signal D202R) and is obtained by the frame interpolation process is produced.

Thus, in the image signal processing section 204 according to Comparative Example 2, the motion vector along the Z-axis direction is not detected and used. Therefore, it is difficult to perform a frame interpolation process or image processing using information pertaining to the Z-axis direction (a motion vector along the Z-axis direction or the like), and it is difficult to perform an effective image quality improvement process specific to a stereoscopic image.

### Embodiment

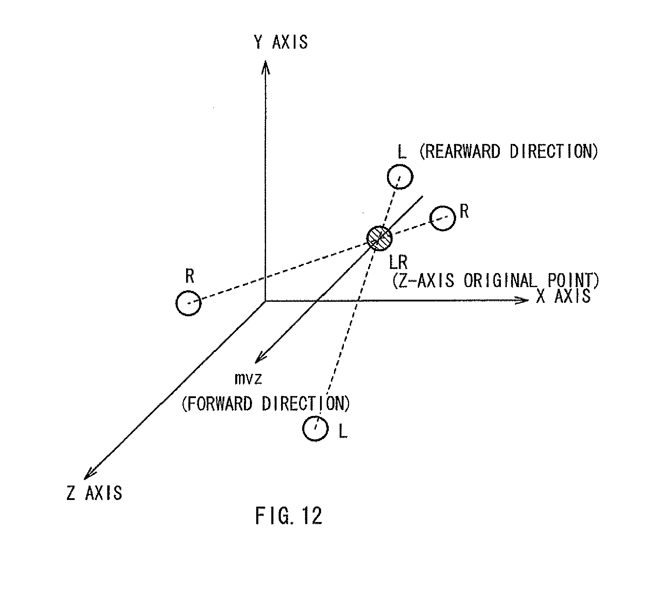

Therefore, in the embodiment, as illustrated in FIG. 3, in the Z-axis information obtaining section 432 in the image signal processing section 43, information pertaining to the depth direction (the Z-axis direction) in a stereoscopic image is obtained. More specifically, as information pertaining to the Z-axis direction, the Z-axis motion vector mvz (for example, refer to FIG. 12) as a motion vector along the Z-axis direction and the Z-axis position information Pz as position information pertaining to the Z-axis direction of a stereoscopic image are obtained.

In the image signal processing section 43, first, in the XY-axis motion vector detection section 431, the XY-axis motion vector mvxy is determined with use of the left-eye image signal D1L and the right-eye image signal D1R which precede the current left-eye image signal D1L and the current right-eye image signal D1R by two frames, and the current left-eye image signal D1L and the right-eye image signal D1R. More specifically, the L-image motion vector detection section 431L determines the XY-axis motion vector mvL in the left-eye image signal D1L with use of the left-eye image signal D1L preceding the current left-eye image signal D1L by two frames and the current left-eye image signal D1L. Likewise, the R-image motion vector detection section 431 R determines the XY-axis motion vector mvR in the right-eye image signal D1R with use of the right-eye image signal D1R preceding the current right-eye image signal D1R by two frames and the current right-eye image signal D1R.

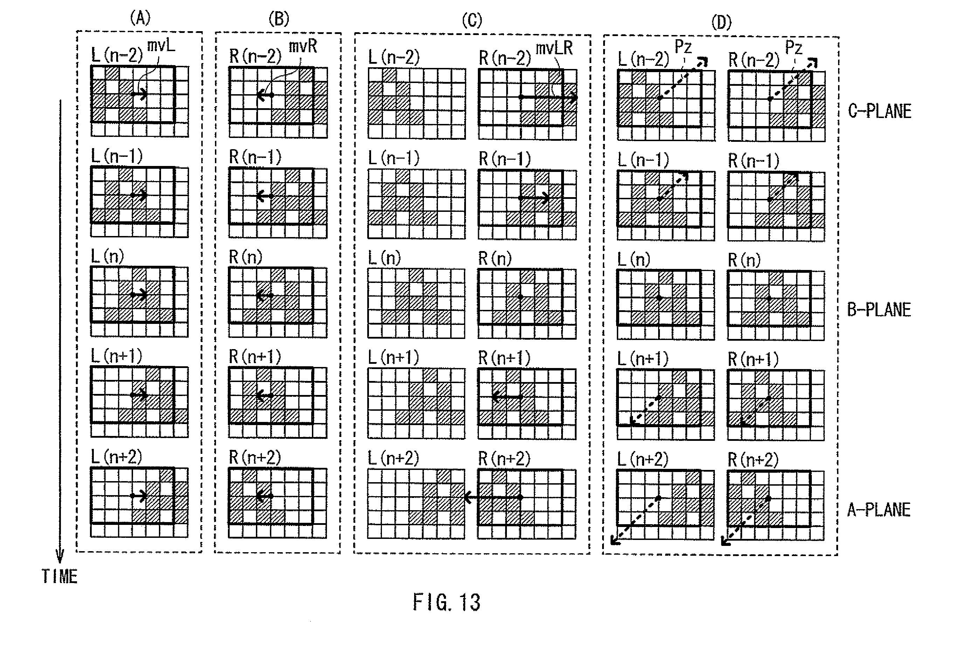

Next, the Z-axis motion vector detection section 432A determines the Z-axis motion vector mvz based on the LR determining flag L/R and the XY-axis motion vectors mvL and mvR. More specifically, a difference (=mvL-mvR) between the XY-axis motion vector mvL in the left-eye image signal D1L and the XY-axis motion vector mvR in the right-eye image signal D1R is determined to obtain the Z-axis motion vector mvz, because of the following reason. That is, as described above, the L-image and the R-image include depth information, so in motion along the Z-axis direction, the X-axis direction in motion vector differs between the L-image and the R-image. More specifically, for example, as illustrated in parts A to C in FIG. 8, in the case where such motion images that a ball flies from a position (the C-plane) behind the position (the B-plane) of the liquid crystal display panel 2 to a position (the A-plane) in front of the position (the B-plane) of the liquid crystal display panel 2 are displayed, the motion vector along the X-axis direction of a ball moving part is as described below. That is, in the L-image, the motion vectors along the X-axis direction in the A-plane, the B-plane and the C-plane are toward a positive direction, and in the R-image, the motion vectors along the X-axis direction in the A-plane, the B-plane and the C-plane are toward a negative direction (for example, refer to the X-axis motion vectors mvL and mvR in parts A and B in FIG. 13). In addition, in FIG. 13, as an example, such motion images that a letter "A" flies from a position (the C-plane) behind the position (the B-plane) of the liquid crystal display panel 2 to the position (the A-plane) in front of the position (the B-plane) of the liquid crystal display panel 2 are used. Moreover, a rectangular region surrounded by a heavy line indicates a block unit of block matching.

Therefore, in this case, where an X-axis motion vector in a ball moving part in the L-image is Lx and an X-axis motion vector in a ball moving part in the R-image is Rx, the direction and the magnitude of the motion vector along the Z-axis direction is represented by a difference (Lx-Rx) between the X-axis motion vector Lx and the X-axis motion vector Rx. Thus, the Z-axis motion vector mvz is obtainable by determining a difference between the XY-axis motion vector mvL in the L-image (the left-eye image signal D1L) and the XY-axis motion vector mvR in the R-image (the right-eye image signal D1R).
(Lx-Rx)<0 ... Operation state where an image moves toward the rear of the liquid crystal display panel 2
(Lx-Rx)=0 ... Stationary state
(Lx-Rx)>0 ... Operation state where an image moves toward the front of the liquid crystal display panel 2

On the other hand, in the LR-image motion vector detection section 432B, the XY-axis motion vector mvLR corresponding to a difference of moving part between the left-eye image signal D1L and the right-eye image signal D1R is determined based on the LR determining flag L/R and the current image signal D1. In this case, in an example illustrated in parts A and B in FIG. 8, as described above, in the A-plane, a shift of the ball toward the right in the L-image and a shift of the ball toward the left in the R-image are at maximum. Moreover, in the B-plane, the shift of the ball in the L-image and the shift of the ball in the R-image are eliminated. Then, in the C-plane, a shift of the ball toward the left in the L-image and a shift of the ball toward the right in the R-image are at maximum.

Therefore, as illustrated in parts C and D in FIG. 13, when the XY-axis motion vector mvLR corresponding to a motion vector of the R-image with respect to the L-image is determined, in the Z-axis information obtaining section 432, the Z-axis position information Pz is allowed to be determined based on the XY-axis motion vector mvLR. In other words, the Z-axis position information Pz corresponding to a difference of moving part between the L-image (the left-eye image signal D1L) and the R-image (the right-eye image signal D1R) are obtainable.

Next, in the frame interpolation section 433, a frame interpolation process is performed individually on the left-eye image signal D1L and the right-eye image signal D1R based on the LR determining flag L/R and the image signals D1 in a current frame and a frame preceding the current frame by two frames and the XY-axis motion vector mvxy. More specifically, a frame interpolation process (a frame-rate enhancement process) using the same frame interpolation process as in the case of 2D image display in related art is performed so as to produce the image signal D2 configured of the left-eye image signal D2L and the right-eye image signal D2R. Thereby, the frame rate in the image signal D2 is increased, so the generation of flickers or the like in stereoscopic image display is reduced, and image quality is improved.

Next, in the image quality improvement section 434, an image quality improvement process is performed on the left-eye image signal D2L and the right-eye image signal D2R obtained by the frame interpolation process with use of the LR determining flag L/R, the XY-axis motion vector mvxy, the Z-axis motion vector mvz and the Z-axis position information Pz. Thereby, an image quality improvement process using obtained Z-axis information (the Z-axis motion vector mvz and the Z-axis position information Pz) is allowed to be performed, and compared to stereoscopic image display in related art, an effective improvement in image quality (an effective image quality improvement process specific to a stereoscopic image) is allowed.

More specifically, for example, in the sharpness process section 434-1 illustrated in FIGs. 4 and 5, a three-dimensional gain value G(3D) is determined in consideration of the two-dimensional gain value G(2D) as in the case of related art and the Z-axis gain value G(z) using Z-axis information (the Z-axis motion vector mvz and the Z-axis position information Pz). Then a sharpness process using a three-dimensional gain value G(3D) is performed by adding the three-dimensional gain value G(3D) to the image signal D2.

Thereby, for example, in the case where the value of the Z-axis motion vector mvz is small (an operation state where an image moves rearward), a process of reducing the three-dimensional gain value G(3D) (blurring) is allowed to be performed. On the other hand, in the case where the value of Z-axis motion vector mvz is large (an operation state where an image moves forward), a process of increasing the three-dimensional gain value G(3D) (sharpening) is allowed to be performed. Therefore, in this case, such a vision that the eyes focus on an object moving forward is achieved, and realism of a stereoscopic image is increased. Moreover, blur in motion images in which motion along the Z-axis direction is fast is preventable. Further, for example, as illustrated in FIG. 5, switching whether or not each of the Z-axis position information Pz and the Z-axis motion vector mvz is reflected on the three-dimensional gain value G(3D) is allowed, so a flexible process is allowed.

As described above, in the embodiment, in the XY-axis motion vector detection section 431, the XY-axis motion vector mvxy (mvL, mvR) is detected from the left-eye image signal D1L and the right-eye image signal D1R which have a parallax therebetween, and in the Z-axis information obtaining section 432, information (the Z-axis motion vector mvz and the Z-axis position information Pz) pertaining to the depth direction (the Z-axis direction) in a stereoscopic image is obtained based on the detected XY-axis motion vectors mvL and mvR, so a stereoscopic image with a more natural sense of depth is allowed to be displayed.

Moreover, in the image quality improvement section 434, an image quality improvement process using the obtained Z-axis information (the Z-axis motion vector mvz and the Z-axis position information Pz) is performed on the left-eye image signal D2L and the right-eye image signal D2R obtained by the frame interpolation process, so compared to stereoscopic image display in related art, an effective improvement in image quality (an effective image quality improvement process specific to a stereoscopic image) is allowed.

### Second Example Embodiment

Next, a second embodiment of the invention will be described below. In the embodiment, the image signal processing section 43 in the above-described first embodiment further has a function of producing and superimposing a test pattern and an OSD (On Screen Display) pattern. In addition, like components are denoted by like numerals as of the above-described first embodiment and will not be further described.

### Configuration of image signal processing section 43A

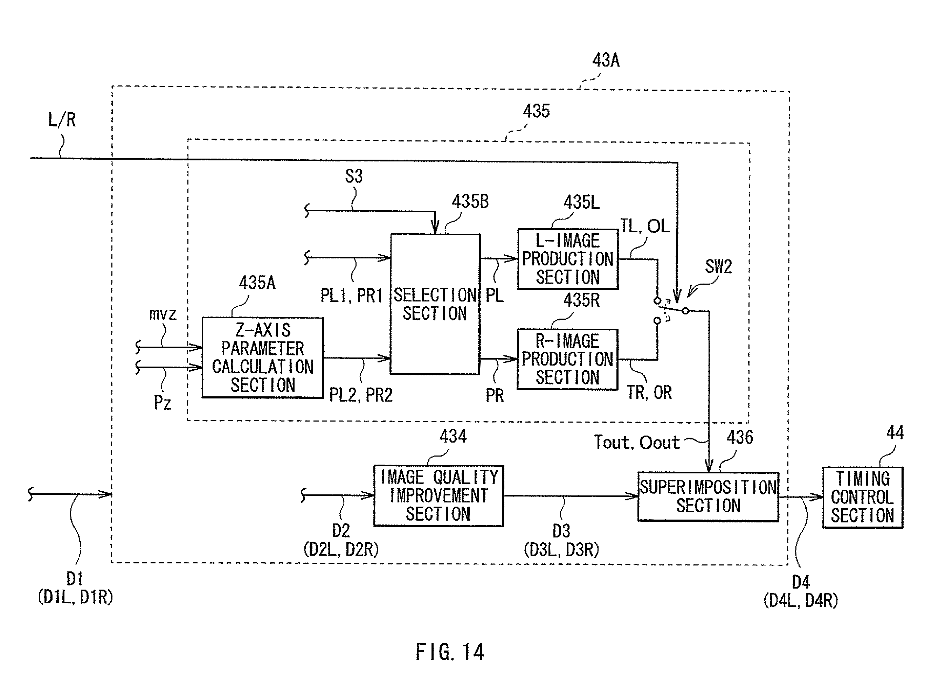

FIG. 14 illustrates a schematic block diagram of an image signal processing section 43A in the embodiment. In addition, the image signal processing section 43A corresponds to a specific example of "an image signal processing apparatus" in the invention.

The image signal processing section 43A performs image signal processing which will be described below based on the image signal D1 so as to produce an image signal D4 (D4L and D4R), and then supply the image signal D4 to the timing control section 44. The image signal processing section 43A is configured by further arranging a test/OSD pattern production section 435 and a superimposition section 436 in the image signal processing section 43 in the above-described first embodiment. In other words, the image signal processing section 43A includes the 2-frame delay section 430, the XY-axis motion vector detection section 431, the Z-axis information obtaining section 432 and the frame interpolation section 433 (all not illustrated in FIG. 14), the image quality improvement section 434, the test/OSD pattern production section 435 and the superimposition section 436.

The test/OSD pattern production section 435 produces a left-eye test pattern TL and a left-eye OSD pattern OL, and a right-eye test pattern TR and a right-eye OSD pattern OR which have a parallax therebetween. Thereby, a test pattern Tout and an OSD pattern Oout corresponding to a final stereoscopic image are produced to be outputted to the superimposition section 436. The test/OSD pattern production section 435 includes a Z-axis parameter calculation section 435A, a selection section 435B, an L-image production section 435L, an R-image production section 435R and a switch SW2. In addition, in the embodiment, the L-image production section 435L and the R-image production section 435R are separately arranged, but a common production section for an L-image and an R-image may have different parameters for the L-image and the R-image.

The Z-axis parameter calculation section 435A dynamically determines a parallax corresponding to a difference in position of the object between the L-image and the R-image based on the Z-axis motion vector mvz or the Z-axis position information Pz or both thereof. Then, the Z-axis parameter calculation section 435A also produces parameters PL2 and PR2 corresponding to left-eye and right-eye test/OSD patterns, respectively, with use of the determined parallax value.

The selection section 435B selects left-eye and right-eye parameters PL1 and PR1 from a plurality of parameters corresponding to a plurality of different parallax values which are prepared in advance or the produced left-eye and right-eye parameters PL2 and PR2. Thereby, switching of a production mode (a first production mode) by the automatically set parameters PL2 and PR2 and a production mode (a second production mode) by the manually set parameters PL1 and PR1 is allowed to be performed according to a selection signal S3 corresponding to external instruction. The parameters selected in such a manner are outputted as left-eye and right-eye parameters PL and PR.

The L-image production section 435L produces the left-eye test pattern TL and the left-eye OSD pattern OL based on the left-eye parameter PL outputted from the selection section 435B. Likewise, the R-image production section 435R produces the right-eye test pattern TR and the right-eye OSD pattern OR based on the right-eye parameter PR outputted from the selection section 435B.

The switch SW2 is a switch for selectively outputting the test pattern TL and the OSD pattern OL outputted from the L-image production section 435L and the test pattern TR and the OSD pattern OR outputted from the R-image production section 435R according to the state of the LR determining flag L/R. More specifically, in the case where the state of the LR determining flag L/R is "an image-for-left-eye", the left-eye test pattern TL and the left-eye OSD pattern OL are outputted as the test pattern Tout and the OSD pattern Oout. On the other hand, in the case where the state of the LR determining flag L/R is "an image-for-right-eye", the right-eye test pattern TR and the right-eye OSD pattern OR are outputted as the test pattern Tout and the OSD pattern Oout.

The superimposition section 436 superimposes the left-eye test pattern TL and the left-eye OSD pattern OL on the left-eye image signal D3L obtained by improving image quality so as to produce a left-eye image signal D4L obtained by superimposition. Likewise, the superimposition section 436 superimposes the right-eye test pattern TR and the right-eye OSD pattern OR on the right-eye image signal D3R obtained by improving image quality so as to produce a right-eye image signal D4R obtained by superimposition. Thereby, a test pattern image or an OSD pattern image (the image signal D4) at an arbitrary position in the X-axis direction, the Y-axis direction and the Z-axis direction is produced.

### Functions and effects of image signal processing section 43A

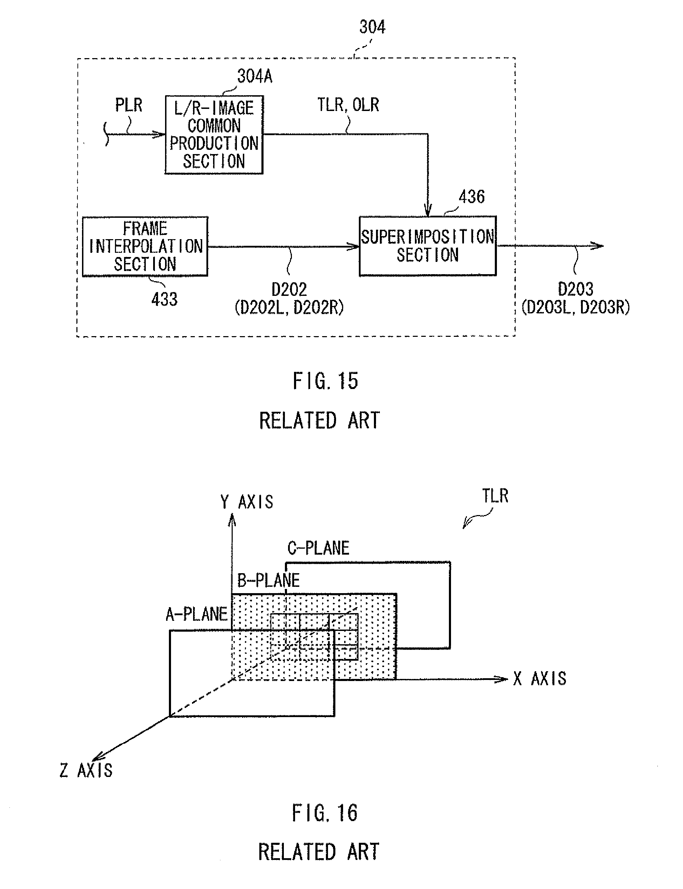

Next, referring to FIGs. 15 to 28 in addition to FIG. 14, functions and the effects of the image signal processing section 43A will be described in detail in comparison with a comparative example.

### Comparative Example 3

First, before describing the image signal processing section 43A according to the embodiment, an image signal processing section according to a comparative example (Comparative Example 3) will be described below referring to FIGs. 15 to 18.

FIG. 15 illustrates a schematic block diagram of an image signal processing section 304 according to Comparative Example 3. The image signal processing section 304 produces an image signal D203 (D203L, D203R) on which a test pattern or an OSD pattern is superimposed, and includes the above-described frame interpolation section 433, the above-described superimposition section 436 and an L/R-image common production section 304A.

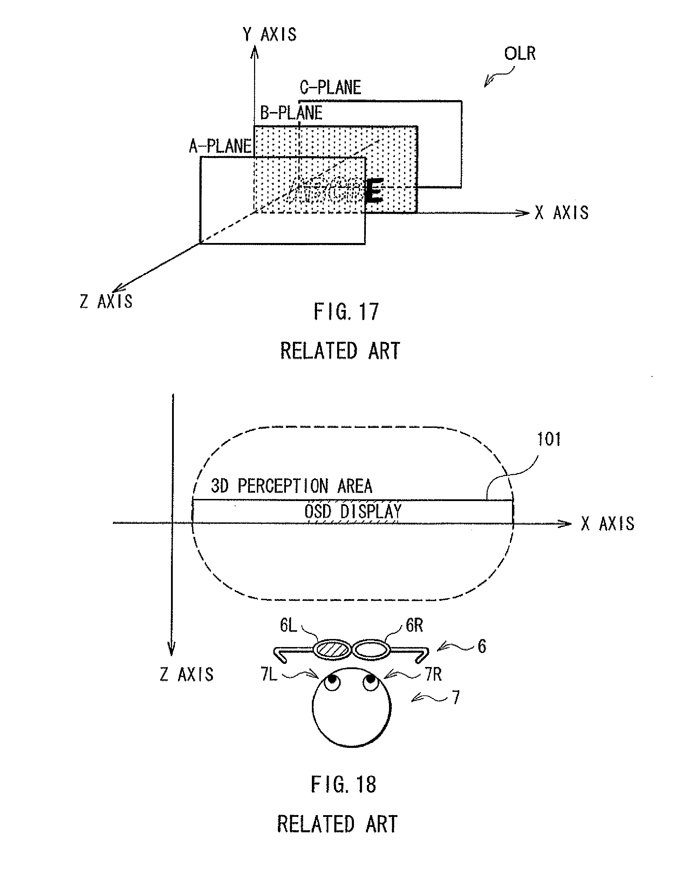

The L/R-image common production section 304A produces a common test pattern TLR (for example, refer to FIG. 16) and a common OSD pattern OLR (for example, refer to FIG. 17) for the L-image and the R-image with use of a common parameter PLR for the L-image and the R-image. Then, in the superimposition section 436, the test pattern TLR and the OSD pattern OLR are commonly superimposed on image signals D202L and D202R obtained by a frame interpolation process so as to produce image signals D203L and D203R.

Thus, in the image signal processing section 304, the common test pattern TLR and the common OSD pattern OLR for the L-image and the R-image are produced to be commonly superimposed on the image signals D202L and D202R. Therefore, also in stereoscopic image display, the test pattern and the OSD pattern are not three-dimensionally displayed but two-dimensionally displayed. In other words, the test pattern and the OSD pattern are displayed only on a plane corresponding to the position of the liquid crystal display panel 2 (the liquid crystal display 1), and a test pattern or an OSD pattern with a Z-axis (depth) direction are not displayed.

More specifically, for example, in a liquid crystal display 101 according to Comparative Example 3 illustrated in FIG. 18, when an OSD pattern is superimposed on a stereoscopic image to be displayed, the position of the OSD pattern is arbitrarily changeable along the X-axis direction and the Y-axis direction, but the position of the OSD pattern is not changeable along the Z-axis direction. In other words, in the Z-axis direction, the OSD pattern is displayed only on a plane corresponding to the position of the liquid crystal display panel (the liquid crystal display 101).

### Embodiment

On the other hand, in the image signal processing section 43A in the embodiment, as illustrated in FIG. 14, first, the test/OSD pattern production section 435 produces the left-eye test pattern TL and the left-eye OSD pattern OL and the right-eye test pattern TR and the right-eye OSD pattern OR which have a parallax therebetween. Thus, a test pattern and an OSD pattern are produced while determining a difference in position of the object (a parallax) between the L-image and the R-image, thereby in the test pattern Tout and the OSD pattern Oout corresponding to a final stereoscopic image, a Z-axis direction component is allowed to be displayed.

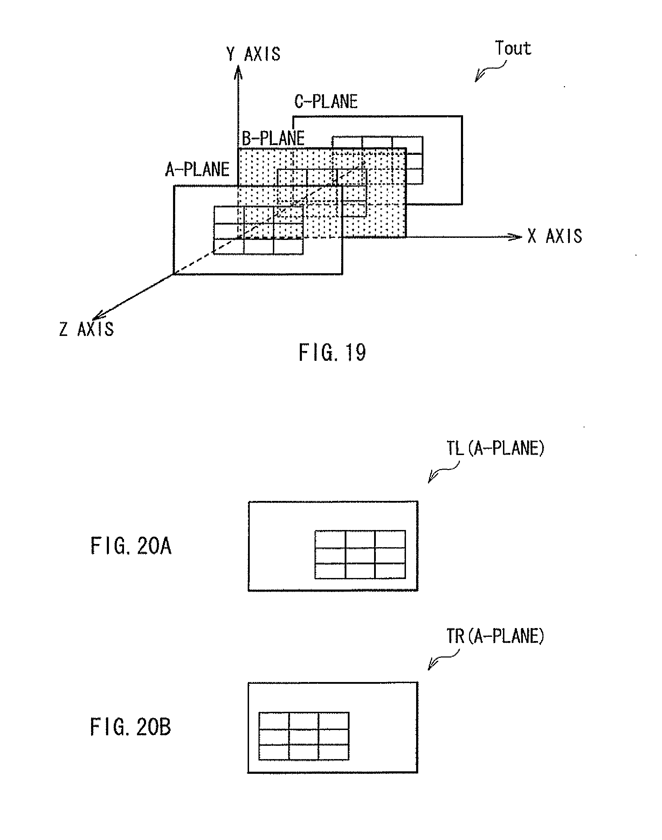

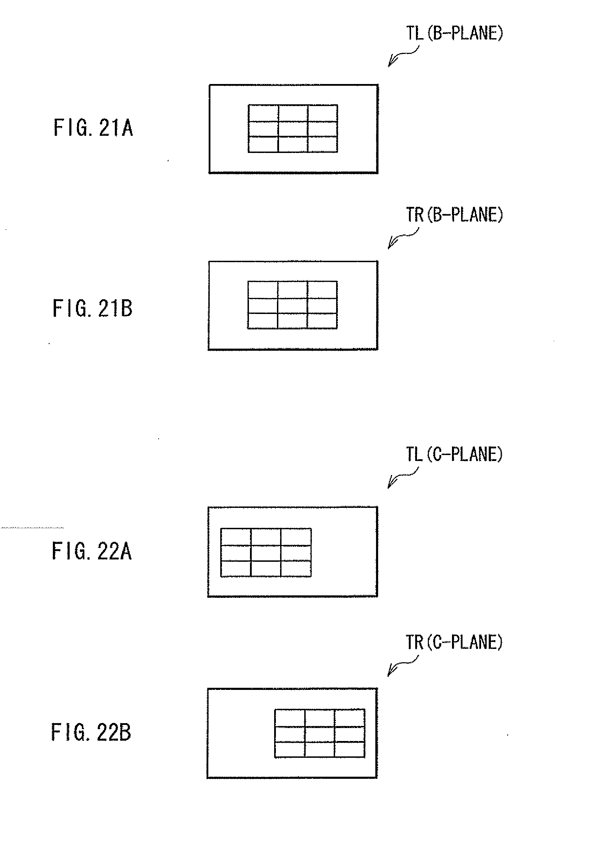

More specifically, for example, as in the case of the test pattern Tout (a grid pattern) illustrated in FIG. 19, a test pattern having the Z-axis direction component corresponding to the above-described A-plane, B-plane and C-plane is allowed to be displayed. In this case, as illustrated in FIGs. 20A and 20B, in the A-plane, in a test pattern TL for the L-image, the grid pattern is shifted toward the right and in a test pattern TR for the R-image, the grid pattern is shifted toward the left. Moreover, for example, as illustrated in FIGs. 21A and 21B, in the B-plane, the grid pattern is placed in the same position in the test pattern TL for the L-image and the test pattern TR for the R-image. Further, for example, as illustrated in FIGs. 22A and 22B, in the C-plane, contrary to the A-plane, in the test pattern TL for the L-image, the grid pattern is shifted toward the left, and in the test pattern TR for the R-image, the grid pattern is shifted toward the right. In addition, a pseudo-3D test pattern is allowed to be produced by individually setting the position of the grid pattern at least in the A-plane, the B-plane and the C-plane and displaying a test pattern at the same time.

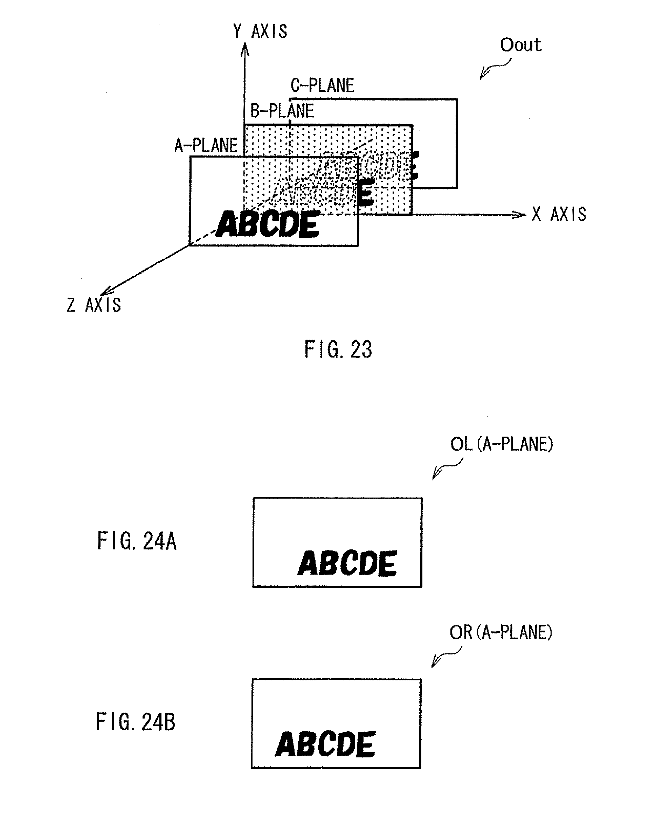

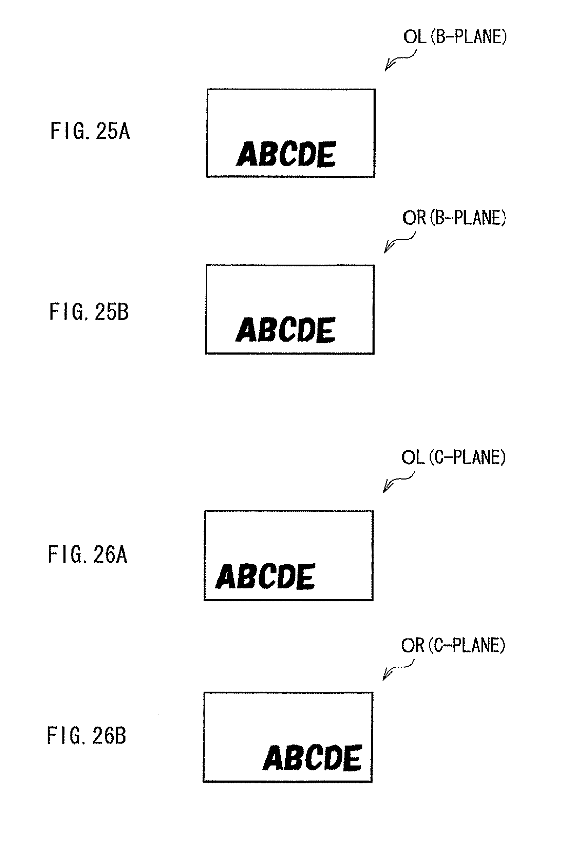

On the other hand, in the OSD pattern Oout, for example, as in the case of the OSD pattern Oout illustrated in FIG. 23, an OSD pattern having an Z-axis direction component corresponding to the A-plane, the B-plane and the C-plane are allowed to be displayed. In this case, for example, as illustrated in FIG. 24A and 24B, in the A-plane, in the OSD pattern OL for the L-image, letters "ABCDE" are shifted toward the right, and in the OSD pattern OR for the R-image, the letters "ABCDE" are shifted toward the left. Moreover, for example, as illustrated in FIGs. 25A and 25B, in the B-plane, the letters "ABCDE" are placed in the same position in the OSD pattern OL for the L-image and the OSD pattern OR for the R-image. Further, for example, as illustrated in FIGs. 26A and 26B, in the C-plane, contrary to the A-plane, in the OSD pattern OL for the L-image, the letters "ABCDE" are shifted toward the left, and in the OSD pattern OR for the R-image, the letters "ABCDE" are shifted toward the right.

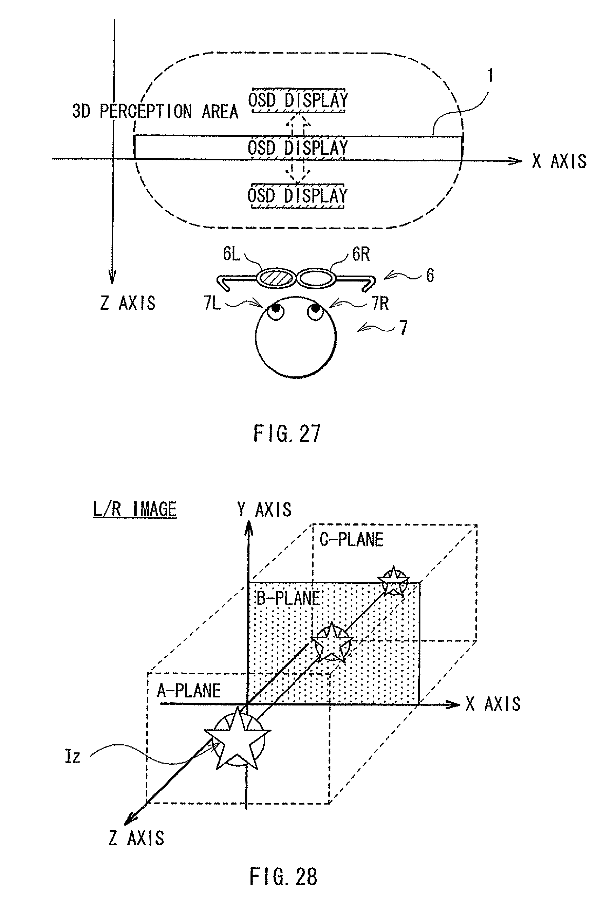

Therefore, unlike the above-described Comparative Example 3, for example, as illustrated in FIG. 27, in the liquid crystal display 1 according to the embodiment, when the OSD pattern is superimposed on a stereoscopic image to be displayed, the position of the OSD pattern is arbitrarily changeable along the X-axis direction, the Y-axis direction and the Z-axis direction. In other words, the OSD pattern is allowed to be displayed also at an arbitrary position along the Z-axis direction.

Moreover, in the embodiment, when the OSD pattern Oout using the parameters P2L and P2R dynamically detected in the Z-axis parameter detection section 435A is superimposed, the following is allowed. More specifically, the superimposition section 436 controls a superimposing position, in the Z-axis direction, of the OSD pattern Oout according to, for example, details of the Z-axis position information Pz, to produce an OSD pattern image. In other words, for example, as illustrated in FIG. 28, for example, an OSD pattern with a star-shaped mark is superimposed and displayed in the same position as an image position on the Z-axis obtained from the Z-axis position information Pz at an arbitrary position on an image (which is set in the center of the image in FIG. 28). Thereby, a Z-axis coordinate indicator Iz indicating the motion of a position along the Z-axis direction is allowed to be displayed. Moreover, when collision detection on the X-axis, the Y-axis and the Z-axis between an image in a stereoscopic image and the OSD pattern is performed, an application in which the OSD pattern runs away from a moving part or chases the moving part is achievable.

As described above, in the embodiment, the test/OSD pattern production section 435 produces the left-eye test pattern TL and the left-eye OSD pattern OL and the right-eye test pattern TR and the right-eye OSD pattern OR which have a parallax therebetween, and the superimposition section 436 superimposes the test patterns TL and TR and the OSD patterns OL and OR on the left-eye image signal D3L and the right-eye image signal D3R, respectively, so a 3D test pattern or a 3D OSD pattern having a depth component (a Z-axis component) is allowed to be displayed. Thereby, image quality adjustment or image quality evaluation in 3D image signal processing is effectively performed. Moreover, a 2D OSD pattern is allowed to be superimposed as a part of a 3D image, so applications such as displaying letters or image quality adjustment when watched by a user are allowed to be widely expanded.

### Modifications

Although the present invention is described referring to the embodiments, the invention is not limited thereto, and may be variously modified.

For example, in the above-described embodiments, the case where both of the Z-axis motion vector mvz and the Z-axis position information Pz are obtained and used as information pertaining to the Z-axis direction in a stereoscopic image is described, but one or both of them may be obtained and used.

Moreover, in the above-described embodiments and the like, the stereoscopic image display system using the shutter glasses is described as an example of the stereoscopic image display system (apparatus), but the invention is not limited thereto. In other words, the invention is applicable to various types of stereoscopic image display systems (apparatuses) (for example, a stereoscopic image display system using polarizing filter glasses and the like) in addition to the stereoscopic image display system (apparatus) using the shutter glasses.

Further, in the above-described embodiments and the like, a liquid crystal display including a liquid crystal display section configured of liquid crystal elements is described as an example of the image display, but the invention is applicable to any other kinds of image displays. More specifically, for example, the invention is applicable to an image display using a PDP (Plasma Display Panel), an organic EL (Electro Luminescence) display or the like.

The pattern-for-left-eye and the pattern-for-right-eye may be a test pattern or an OSD pattern.

In addition, the processes described in the above-described embodiments and the like may be performed by hardware or software. In the case where the processes are performed by software, a program forming the software is installed in a general-purpose computer or the like. Such a program may be stored in a recording medium mounted in the computer in advance.

The present application contains subject matter related to that disclosed in Japanese Priority Patent Application JP 2009-164202 filed in the Japan Patent Office on July 10, 009, the entire content of which is hereby incorporated by references.

It should be understood by those skilled in the art that various modifications, combinations, sub-combinations and alterations may occur depending on design requirements and other factors insofar as they are within the scope of the appended claims or the equivalents thereof.

## Claims

1. An image signal processing apparatus comprising:
a first motion vector detection section detecting one or more two-dimensional motion vectors as motion vectors along a X-Y plane of an image, from an image-for-left-eye and an image-for-right-eye which have a parallax therebetween; and
an information obtaining section obtaining, based on the detected two-dimensional motion vectors, information pertaining to a Z-axis direction which is a depth direction in a stereoscopic image formed with the image-for-left-eye and the image-for-right-eye.

2. The image signal processing apparatus according to claim 1, wherein
the information obtaining section includes:
a second motion vector detection section obtaining a Z-axis motion vector along the Z-axis direction based on the two-dimensional motion vectors, and
a position information detection section obtaining Z-axis position information along the Z-axis direction of the stereoscopic image.

3. The image signal processing apparatus according to claim 2, wherein
the first motion vector detection section detects the two-dimensional motion vectors from the image-for-left-eye and the image-for-right-eye, respectively, and
the second motion vector detection section obtains the Z-axis motion vector by determining a difference between the two-dimensional motion vector detected from the image-for-left-eye and the two-dimensional motion vector detected from the image-for-right-eye.

4. The image signal processing apparatus according to claim 2, wherein
the first motion vector detection section detects, as the two-dimensional motion vector, a left-right motion vector corresponding to a difference of moving part between the image-for-left-eye and the image-for-right-eye, and
the position information obtaining section obtains the Z-axis position information based on the left-right motion vector.

5. The image signal processing apparatus according to claim 2, further comprising:
a frame interpolation section performing a frame interpolation process on the image-for-left-eye with use of the two-dimensional motion vector detected from the image-for-left-eye, and performing a frame interpolation process on the image-for-right-eye with use of the two-dimensional motion vector detected from the image-for-right-eye.

6. The image signal processing apparatus according to claim 5, comprising:
an image quality improvement section performing an image quality improvement process on the image-for-left-eye the image-for-right-eye which have been subjected to the frame interpolation process, with use of the Z-axis motion vector or the Z-axis position information or both thereof.

7. The image processing apparatus according to claim 6, wherein
the image quality improvement section is a sharpness process section performing a sharpness process as the image quality improvement process.

8. The image signal processing apparatus according to claim 7, wherein
the sharpness process section determines a three-dimensional gain value as a final gain value in consideration of a two-dimensional gain value determined with use of the two-dimensional motion vectors and a Z-axis gain value determined with use of the Z-axis motion vector or the Z-axis position information or both thereof, and performs the sharpness process with use of the three-dimensional gain value.

9. The image signal processing apparatus according to claim 8, wherein
the magnitude of the Z-axis gain value is determined according to magnitude and direction of either the Z-axis motion vector or the Z-axis position information.

10. The image signal processing apparatus according to claim 2, comprising:
a pattern production section producing a pattern-for-left-eye and a pattern-for-right-eye which have a parallax therebetween; and
a superimposition section superimposing the pattern-for-left-eye on the image-for-left-eye and superimposing the pattern-for-right-eye on the image-for-right-eye, thereby producing a pattern image including a superimposed pattern at an arbitrary position in the X-axis direction, the Y-axis direction and the Z-axis direction.

11. The image signal processing apparatus according to claim 10, wherein
the pattern production section dynamically determines a parallax between the image-for-left-eye and the image-for-right-eye based on the Z-axis motion vector or the Z-axis position information or both thereof, to produce the pattern-for-left-eye and the pattern-for-right-eye with use of the determined parallax.

12. The image signal processing apparatus according to claim 10, wherein
the pattern production section selects a parallax value from a plurality of prepared different parallax values, according to external instruction, to determine the selected parallax value as a parallax between the image-for-left-eye and the image-for-right-eye.

13. The image signal processing apparatus according to claim 10, wherein
the pattern production section is configured to switch between a first production mode and a second production mode,
in the first production mode, the pattern production section dynamically determining a parallax between the image-for-left-eye and the image-for-right-eye based on the Z-axis motion vector or the Z-axis position information or both thereof, to produce the pattern-for-left-eye and the pattern-for-right-eye with use of the determined parallax, and
in the second production mode, the pattern production section selecting a parallax value from a plurality of prepared different parallax values according to external instruction, to determine the selected parallax value as the parallax between the image-for-left-eye and the image-for-right-eye.

14. The image signal processing apparatus according to claim 10, wherein
each of the pattern-for-left-eye and the pattern-for-right-eye is an OSD pattern, and
the superimposition section controls a superimposing position, in the Z-axis direction, of the OSD pattern onto the image-for-left-eye and the image-for-right-eye according to details of the Z-axis position information, to produce an OSD pattern image.

15. An image display comprising:
a first motion vector detection section detecting one or more two-dimensional motion vectors as motion vectors along an X-Y plane of an image, from an image-for-left-eye and an image-for-right-eye which have a parallax therebetween;
an information obtaining section obtaining, based on the detected two-dimensional motion vectors, information pertaining to a Z-axis direction which is a depth direction in a stereoscopic image formed with the image-for-left-eye and the image-for-right-eye;
a frame interpolation section performing a frame interpolation process on the image-for-left-eye with use of the two-dimensional motion vector detected from the image-for-left-eye, and performing a frame interpolation process on the image-for-right-eye with use of the two-dimensional motion vector detected from the image-for-right-eye;
an image quality improvement section performing an image quality improvement process on the image-for-left-eye and the image-for-right-eye which have been subjected to the frame interpolation process with use of the information pertaining to the Z-axis direction; and
a display section alternately displaying, in a time-divisional manner, the image-for-left-eye and the image-for-right-eye which have been subjected to the image quality improvement process.
